# EUROPEAN PATENT APPLICATION

(11) **EP 2 860 717 A1**
(43) Date of publication of application: **15.04.2015**
(21) Application number: 14187282.0
(22) Date of filing: 01.10.2014
(51) Int. Cl.: G08C 19/02, H01R 13/703

(54) **Method and device for WiFi controlled electric switch**

(30) Priority: 06.10.2013 IL 22874913
(71) Applicant: Tubi, Adir, 75437 Rishon LeZion (IL); Nuriel, Eyal, 79530 Moshav Segula (IL)
(72) Inventor: Tubi, Adir, 75437 Rishon LeZion (IL); Nuriel, Eyal, 79530 Moshav Segula (IL)
(74) Representative: Coehn, Markus

(57) **Abstract**

The present disclosure includes a wireless outlet controller comprising WiFi communications means, a microprocessor in electronic communication with said WiFi communications means, a relay in electronic communication with said microprocessor, a socket adapted for use with standard electrical plugs, a mains connection, the socket being reversibly connected to said mains connection by means of said relay, controlled over said WiFi communications means by any WiFi connected device having appropriate software control means, and one such wireless outlet controller may relay control and state signals to and from other such wireless outlet controllers.

## Description

### FIELD OF THE INVENTION

The present invention relates to the field of smart homes and more particularly WiFi-controlled electrical outlets.

### BACKGROUND OF THE INVENTION

The 'smart home' refers to homes that are outfitted with various control, sense, and feedback mechanisms allowing for more intelligent use of appliances, energy savings, convenience, intrusion detection and the like. Often such systems involve control over electrical outlets from centralized and/or computerized means, using communications means such as RF or power-line communications. It is however a long-felt need to provide outlet control systems not reliant on relatively expensive RF or power line systems.

US 2013/0200703 A1 - INTELLECTUAL POWER CONTROLLING SYSTEM describes an intellectual power controlling system which includes a gateway controller and at least a socket module. The gateway controller is configured to wirelessly control power statuses of all socket modules in an area, and to record a power status information of each socket module in the area at a certain time. However, the topology of the invention's switches relies on the use of a 'main switch module', which control some set of other modules, and therefore the switch modules themselves cannot act as relay stations. This is different from the topology of the current application in which all of the modules are equivalent; none needs to be designated as a 'main module' and hence the control over the system is at the level of the individual switch, and not at the level of groups of switches, and may be relayed and extended indefinitely.

### SUMMARY OF THE INVENTION

The electric outlet control system of the invention utilizes the ubiquitous Wi-Fi networks, which may be found in many modem home networks.

In analogy to the operation of IP cameras, the inventive system uses a dedicated WiFi module for each electric socket, to control each socket individually and remotely. This requires a simple reworking of the electric socket to fit in several new components.

These components are connected appropriately and housed in a casing adapted to fit the existing standard size of a common house hold switch box.

It is within provision of the invention to disclose a wireless outlet controller comprising (for example, consisting of elements):
WiFi communications means;
a microprocessor in electronic communication with said WiFi communications means;
a relay in electronic communication with said microprocessor;
a socket adapted for use with standard electrical plugs;
a mains connection;
characterized in that said socket is reversibly connected to said mains connection by means of said relay, controlled over said WiFi communications means by any WiFi connected device having appropriate software control means, and further characterized in that one such wireless outlet controller may relay control and state signals to and from other such wireless outlet controllers.

It is further within provision of the invention that said microprocessor and said WiFi communications means are integral.

It is further within provision of the invention comprising a manual switch adapted to allow users to activate and deactivate said outlet manually.

It is further within provision of the invention comprising a power resistor adapted to switchably shunt current away from a load circuit.

It is further within provision of the invention comprising a load device in electrical communication with said relay.

It is further within provision of the invention to switch loads selected from the group consisting of: light switch, light dimmer, electric blinds, air conditioner, oven, water heater, television, electric outlets, and electrical appliances.

It is further within provision of the invention comprising alternate communications means selected from the group consisting of: Bluetooth, AM, FM, CDMA, Ethernet cable, LAN cable, optical, GSM, radio communications.

It is further within provision of the invention to supply mains voltages selected from the group consisting of: 110VAC, 220VAC, 440VAC.

It is further within provision of the invention comprising power monitoring means.

It is further within provision of the invention characterized in that said software control means is adapted to report state information concerning said device.

The foregoing embodiments of the invention have been described and illustrated in conjunction with systems and methods thereof, which are meant to be merely illustrative, and not limiting. Furthermore just as every particular reference may embody particular methods/systems, yet not require such, ultimately such teaching is meant for all expressions notwithstanding the use of particular embodiments.

### BRIEF DESCRIPTION OF THE DRAWINGS

Embodiments and features of the present invention are described herein in conjunction with the following drawings:
Fig. 1 depicts a block diagram of the inventive device;
Fig. 2 depicts a detail of the block diagram of the inventive device.

It should be understood that the drawings are not necessarily drawn to scale.

### DETAILED DESCRIPTION OF THE PREFERRED EMBODIMENTS

The present invention will be understood from the following detailed description of preferred embodiments, which are meant to be descriptive and not limiting. For the sake of brevity, some well-known features, methods, systems, procedures, components, circuits, and so on, are not described in detail.

The electric outlet control system of the invention utilizes the ubiquitous Wi-Fi networks, which may be found in many modem home networks.

In analogy to the operation of IP cameras, the inventive system uses a dedicated WiFi module for each electric socket, to control each socket individually and remotely. This requires a simple reworking of the electric socket to fit in four new main components. These are
1. WiFi card which can join the home WiFi internet network
2. Transformer adapted to change voltage from 220/110VAC to ∼5VDC
3. Microprocessor running special purpose control software
4. Relay

The above components are connected appropriately and housed in a designed casing adapted to fit the existing standard size of a common house hold switch box.

The system is adapted to be used for control of electrical outlets, switches, dimmers, and any devices or appliances which may be connected thereto. Such appliances include but are not limited to the air conditioner, home security system, webcams, alarm clock, answering machine, BBQ grill, barbecue grill, blender, ceiling fan, cell phone , clock, clothes dryer, clothes washer, computer, convection oven, copier, fax, dishwasher, dryer, edger, electric blanket, electric fan, TV, freezer, furnace, garage door, heater, humidifier, oven, printer, radio, range, refrigerator, scanner, smoke detector, stereo, stove, telephone, television, timer, video camera, walkie-talkie, washing machine, water heater, and others.

The switches are adapted to be controlled from any WiFi-connected device, including but not limited to smart phones, computers, tablets, PDAs, laptops, desktops, Kindles®, and the like using any suitable operating system (including but not limited to OSX, Windows, iOS, Android, Unix, and the like.)

In order to control the socket outside the home network range a unique identifier will generally be required, such as an IP address. This address may be a static IP (such as an IPv6 address), a dynamically allocated address (such as one provided by DHCP or equivalent), or otherwise.

The WiFi connectivity may be obtained using bespoke circuits or by incorporation of ASICs or other circuits within a larger design. Suitable devices include those such as the TPLink WR703n TP-Link 703N Ultra Mini Portable 3G 802.11b/g/n 150Mbps WiFi Wireless Router, the Carambola 2 surface mountable single sided Wi-Fi enabled Linux module, the MRF24WB0MA Wi-Fi PICtail, the TWR-WIFI-G1011MI,or any of a number of similar solutions.

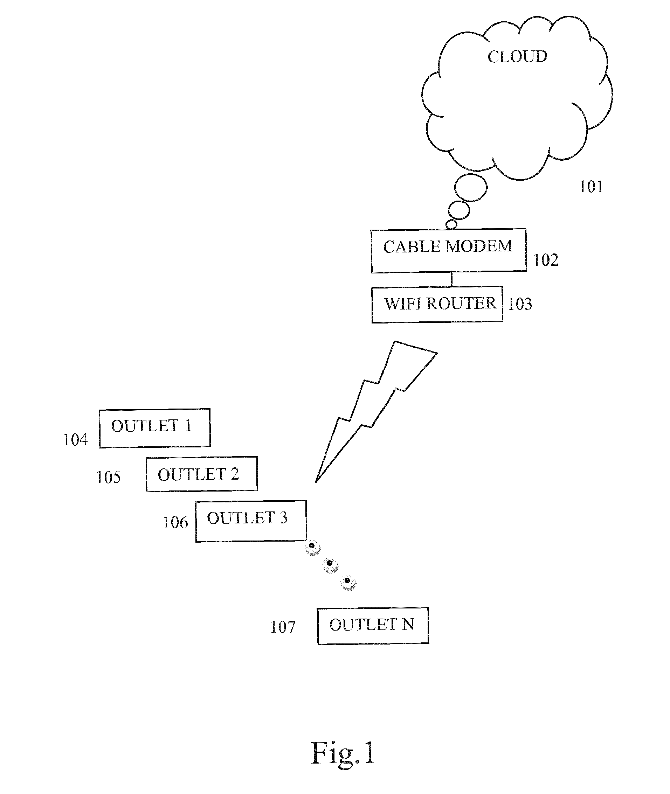

In Fig. 1 a block diagram of one possible embodiment of the invention is presented. Here a number of the inventive outlets 104-107 are in use, each in electronic wireless communication with the WiFi router 103. This router is (for instance) attached by cable to a cable modem 102 which in turn is attached by cable to the internet service provider 101.

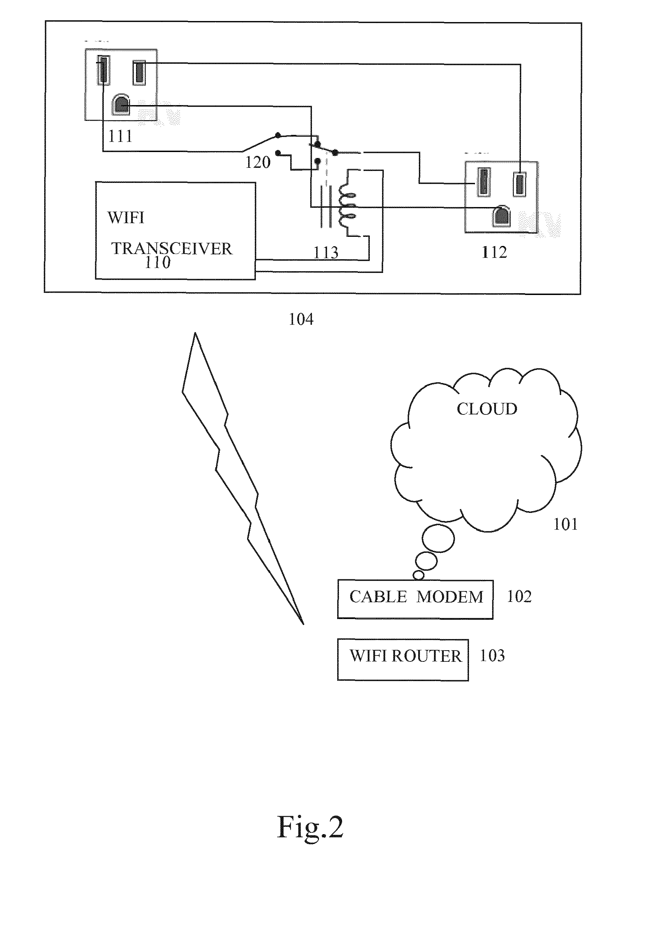

A more detailed diagram of the WiFi-controlled outlet 104 is shown in Fig. 2. Here the individual components are shown, comprising WiFi transceiver 110 controlling a relay 113. This relay in some embodiments connects an input line from plug 111 to an outlet line of socket 112, thereby allowing the device to be plugged into an existing wall socket in modular fashion. Alternatively, the device replaces a normal wall socket entirely. As before, WiFi controlled outlet 104 is in electronic wireless communication with the WiFi router 103, which is (for instance) attached by cable to a cable modem 102, which in turn is attached by cable to the internet service provider 101. The astute reader will note a further manual switch 120 which allows the user to manually turn the outlet on or off; as will be clear to one skilled in the art the manual switch has been wired in a 'three-way' configuration, but any other configuration may be employed, including series and parallel combinations.

It is within provision of the invention that one such wireless outlet controller may relay control and state signals to and from other such wireless outlet controllers. Thus the effective range of the devices may be arbitrarily extended.

It further within provision of the invention that the relay 113 may be mechanical or entirely electrical, for instance comprises a solid state switch (SST), a triac, or any other switching means. It is further within provision of the invention that said switching means be used as a dimmer, for instance by means of pulse-width modulation, voltage modulation, or the like.

It is further within provision of the invention that a power resistor be incorporated in the circuit, so as to allow a certain amount of current to run continuously through said power resistor and be optionally routed through external or internal circuits upon command.

The foregoing description and illustrations of the embodiments of the invention has been presented for the purposes of illustration. It is not intended to be exhaustive or to limit the invention to the above description in any form.

Any term that has been defined above and used in the claims, should be interpreted according to this definition.

The reference numbers in the claims are not a part of the claims, but rather used for facilitating the reading thereof. These reference numbers should not be interpreted as limiting the claims in any form.

Although the present invention is defined in the attached claims, it is to be understood that the invention can alternatively also be defined in accordance with the following embodiments:
1. A wireless outlet controller consisting of elements:
   WiFi communications means; a microprocessor in electronic communication with said WiFi communications means; a relay in electronic communication with said microprocessor; a socket adapted for use with standard electrical plugs; a mains connection; characterized in that said socket is reversibly connected to said mains connection by means of said relay, controlled over said WiFi communications means by any WiFi connected device having appropriate software control means, and further characterized in that one such wireless outlet controller may relay control and state signals to and from other such wireless outlet controllers.
2. The device of embodiment 1 further characterized in that said microprocessor and said WiFi communications means are integral.
3. The device of embodiment 1 further comprising a manual switch adapted to allow users to activate and deactivate said outlet manually.
4. The device of embodiment 1 further comprising a power resistor adapted to switchably shunt current away from a load circuit.
5. The device of embodiment 1 eliting said socket and further comprising a load device in electrical communication with said relay.
6. The device of embodiment 1 adapted to switch loads selected from the group consisting of: light switch, light dimmer, electric blinds, air conditioner, oven, water heater, television, electric outlets, and electrical appliances.
7. The device of embodiment 1 further comprising alternate communications means selected from the group consisting of: Bluetooth, AM, FM, COMA, Ethernet cable, LAN cable, optical, GSM, radio communications.
8. The device of embodiment 1 adapted to supply mains voltages selected from the group consisting of: 110VAC, 220VAC, 440VAC.
9. The device of embodiment 1 further comprising power monitoring means.
10. The device of embodiment 1 further characterized in that said software control means is adapted to report state information concerning said device.
11. A method for wireless control of an electrical outlet comprising steps of: Providing WiFi communications means; Providing a microprocessor in electronic communication with said WiFi communications means; Providing a relay in electronic communication with said microprocessor; Providing a socket adapted for use with standard electrical plugs; Providing a mains connection; characterized in that said socket is reversibly connected to said mains connection by means of said relay, controlled over said WiFi communications means by any WiFi connected device having appropriate software control means, and further characterized in that one such wireless outlet controller may relay control and state signals to and from other such wireless outlet controllers.
12. The method of embodiment 11 further characterized in that said microprocessor and said WiFi communications means are integral.
13. The method of embodiment 11 further comprising a manual switch adapted to allow users to activate and deactivate said outlet manually.
14. The method of embodiment 11 further comprising a power resistor adapted to switchably shunt current away from a load circuit.
15. The method of embodiment lleliting said socket and further providing a load device in electrical communication with said relay.
16. The method of embodiment 11 adapted to switch loads selected from the group consisting of: light switch, light dimmer, electric blinds, air conditioner, oven, water heater, television, electric outlets, and electrical appliances.
17. The method of embodiment 11 further comprising alternate communications means selected from the group consisting of: Bluetooth, AM, FM, COMA, Ethernet cable, LAN cable, optical, GSM, radio communications.
18. The method of embodiment 11 further adapted to supply mains voltages selected from the group consisting of: II OV AC, 220V AC, 440V AC.
19. The method of embodiment 11 further comprising power monitoring means.
20. The method of embodiment 11 further characterized in that said software control means is adapted to report state information concerning said device.

A number of implementations have been described. Nevertheless, it will be understood that various modifications may be made without departing from the spirit and scope of the following claims. Accordingly, other implementations are within the scope of the following claims:

## Claims

1. A wireless outlet controller comprising:
WiFi communications means adapted to utilize extant wifi infrastructure, said WiFi communications means adapted to act as a WiFi repeater;
a microprocessor in electronic communication with said WiFi communications means;
a relay in electronic communication with said microprocessor;
a socket adapted for use with standard electrical plugs;
a mains connection;
a power resistor adapted to allow said controller to be used in light sockets **characterized in that** said socket is reversibly connected to said mains connection by means of said relay, and that the controller is configured to be controlled over said WiFi communications means by a WiFi connected device, and further **characterized in that** the wireless outlet controller is configured to relay control and state signals to and from other such wireless outlet controllers, and further **characterized in that** programs running on said microprocessor allow for time-based activation and deactivation of said outlet, and further **characterized in that** the controller is configured such that programs running on said microprocessor can be dynamically updated.

2. The wireless outlet controller of claim 1 further **characterized in that** said controller is a plug-and-play device requiring no infrastructure changes.

3. The device of claim 1 or 2 further **characterized in that** said microprocessor and said WiFi communications means are integral.

4. The device of any one of claims 1 to 3 further comprising a manual switch adapted to allow users to activate and deactivate said outlet manually.

5. The device of any one of claims 1 to 4 further comprising a power resistor adapted to switchably shunt current away from a load circuit.

6. The device of any one of claims 1 to 5 further comprising a load device in electrical communication with said relay.

7. The device of any one of the preceding claims adapted to switch loads selected from the group consisting of: light switch, light dimmer, electric blinds, air conditioner, oven, water heater, television, electric outlets, and electrical appliances.

8. The device of any one of the preceding claims further comprising alternate communications means selected from the group consisting of: Bluetooth, AM, FM, CDMA, Ethernet cable, LAN cable, optical, GSM, radio communications.

9. The device any one of the preceding claims adapted to supply mains voltages selected from the group consisting of: 110VAC, 220VAC, 440VAC.

10. The device of any one of the preceding claims further comprising power monitoring means.

11. The device any one of the preceding claims further **characterized in that** said software control means is adapted to report state information concerning said device.

12. A method for wireless control of an electrical outlet comprising steps of:
Providing WiFi communications means adapted to utilize extant wifi infrastructure, said WiFi communications means adapted to act as a WiFi repeater;
Providing a microprocessor in electronic communication with said WiFi communications means;
Providing a relay in electronic communication with said microprocessor;
Providing a socket adapted for use with standard electrical plugs;
Providing a mains connection;
providing a power resistor adapted to allow said controller to be used in light sockets;
**characterized in that** said socket is reversibly connected to said mains connection by means of said relay, and that the controller is configured to be controlled over said WiFi communications means by a WiFi connected device, and further **characterized in that** the wireless outlet controller is configured to relay control and state signals to and from other such wireless outlet controllers, and further **characterized in that** programs running on said microprocessor allow for time-based activation and deactivation of said outlet, and further **characterized in that** the controller is configured such that programs running on said microprocessor can be dynamically updated.

13. The method of claim 12, wherein the controller is a plug-and-play device requiring no infrastructure changes.

14. The method of claim 12 or 13 further **characterized in that** said microprocessor and said WiFi communications means are integral.

15. The method of any one of claims 12 to 14 further comprising a manual switch adapted to allow users to activate and deactivate said outlet manually.
